# EUROPEAN PATENT SPECIFICATION

(11) **EP 0 776 280 B1**
(45) Date of publication and mention of the grant of the patent: **15.04.1998**
(21) Application number: 95921072.5
(22) Date of filing: 07.06.1995
(51) Int. Cl.: B60R 13/02

(54) **COMPOSITE ARTICLES**
VERBUNDWERKSTÜCKE
ARTICLES COMPOSITES

(30) Priority: 16.08.1994 GB 9416555
(43) Date of publication of application: 04.06.1997
(73) Proprietor: ABCD PLASTICS LIMITED, Tividale Warley West Midlands B69 2PA (GB)
(72) Inventor: THORNE, Malcolm, Roger 2 Woodcock Close, Solihull West Midlands B94 5HH (GB)
(74) Representative: Stonehouse, Sidney William
(86) International application number: GB9501328
(87) International publication number: WO9605082

(56) References cited:
- EP-A- 0 161 416
- CA-A- 890 985
- FR-A- 2 166 583
- GB-A- 2 070 458
- US-A- 5 139 310
- PATENT ABSTRACTS OF JAPAN vol. 5, no. 172 (M-095) 31 October 1981 & JP,A,56 098 151 (INOUE MTP) 7 August 1981
- PATENT ABSTRACTS OF JAPAN vol. 18, no. 271 (C-1203) 24 May 1994 & JP,A,06 046 911 (SAKAN) 22 February 1994

## Description

The present invention relates to impact absorbing composite articles in which an expanded plastics material is combined with an additional element.

According to the present invention an impact absorbing composite article is provided, comprising a first member and a second member integrally joined together,the first member being of an expanded plastics material and the second member being of a denser material having generally greater strength characteristics than the material of the first member such that the composite article has overall an impact absorbing strength substantially greater than that of the first member, characterised in that the second member is a vacuum formed elastically deformable core element of a thermoplastics material covered by the first member, and the second member is formed with at least one point of weakness or flexing about which the composite article is designed to bend or deform under impact.

The first member may be of a polyurethane foam the density of which can be selected according to the intended use of the composite article. Thus that part may range from being soft and pliable to being virtually solid. The foam may have a specific gravity as low as 0.03.

The second member is made of a thermoplastics material. This can save on cost and weight. Plastics material having a specific gravity as low as 0.30 may be used. The plastics material is formed to the required shape of the second member by vacuum forming.

Depending upon the performance required from its structure, the materials of the composite article may be varied to give differing degrees of softness, flexibility, stiffness, absorption or crushability. Different thermal requirements may be achieved by suitable selection of the materials.

The external surface of the composite article may have a raw material finish or it may be prepared or treated as appropriate to have one or more desired properties such as, to be, for example, UV stabilised, flexible, rigid, coloured or able to be coloured, resistant to salt, certain chemicals and/or oil, diesel oil or petroleum, energy absorbing and impact resilient.

In one particular embodiment, an impact absorbing composite article in accordance with the present invention is provided in the form of a bull bar, nudge bar or like protector of bar-like form adapted for attachment to a vehicle.

Bull bars, nudge bars and like protectors may be attached, for example, to the front of a car, a van or another form of vehicle to reduce the risk of damaging the vehicle's bodywork in the case of a collision; they are often fitted to four wheel drive vehicles and vehicles suitable for use off-road. Traditionally, such protectors have been made of rigid metal, usually steel, section and/or tube or bar. Whilst these constructions have generally been quite effective in protecting vehicles to which they are attached they can be hazardous to people or animals unfortunate enough to be struck by them even at low speeds. Although attempts have been made to reduce the force of an impact resulting from collision, for example, by providing an exterior layer of foam on a steel bar, such attempts have not had any significant effect in improving the safety of the protectors. The inherent rigidity of the known protectors and their substantial resistance to being deformed or to absorb energy upon impact contribute to their danger in collisions with people or animals.

In one embodiment of an impact absorbing composite article in accordance with the invention in the form of a protective bar for a vehicle, the second member being elastically deformable allows the bar to flex upon impact if an object is struck and, unless the impact load is excessive, to resume subsequently substantially its original shape. The bar nevertheless has sufficient strength to provide some protection to the vehicle to which it is fitted. The flexing of the bar absorbs some of the energy of an impact and can reduce injury to a person or animal struck. Both members of the bar may contribute to the bar's flexibility and capacity for energy absorption.

The point of weakness or flexing point in the bar encourages the bar to bend or deform at a particular point along its length as a result of a stronger impact. More than one such point may be provided. The point or points may be arranged such that the way the bar deforms depends not only on the force of the impact but also on the position of the impact along the bar's length. The point or points of weakness or flexing may result in deforming or deflection of the bar at a position remote from the position of the point of impact.

Since the expanded plastics of the first member provides the outwardly facing surface of the composite article, deformation of the expanded plastics surface upon contact with a colliding object increases the area of contact between the composite article and the colliding object and thus reduces the pressure exerted by the composite article on that object. This effect may also be beneficial in reducing or avoiding damage or injury caused by the composite article.

The composite article, and its first and second members, may have any suitable shape and profile according to the intended use of the article. The shape of the first and second members may be arranged to encourage flexing and deformation of both members upon impact and to encourage the distribution of forces and energy between both members. The two members are preferably fixed or bonded together during the forming process.

Any suitable thermoplastics material may be used for the second member.

One or more flexing points may be created in the second member as part of the vacuum forming process.

The expanded plastics material of the first member is conveniently an integral skin foam but it may be of another suitable material.

One or more additional elements may be incorporated into the composite article, for example for the purpose of fixing the article for use to a support, mounting or other article, or for attaching one or more other items to the article. The or each additional element may be incorporated into the article as an integral part of its structure, or the article may be adapted to have the or each additional element attached to it. It may be that at least one additional element is provided as an integral part of the structure of the article and the article is adapted to have one or more further elements attached to it.

Graphic, informational, promotional or other such display detail may be included in the composite article, conveniently as it is being formed.

In a further embodiment, a composite bar in accordance with the invention is made in the form of a baton.

Traditionally, batons used, for example, by the Police have been made of wood. One disadvantage of such known batons is the difficulty experienced by a user in judging how hard to strike with the baton to produce an effective warning blow to a recipient but without unintentionally causing serious injury.

The present invention, incorporating some or all of the features discussed above, is used in one embodiment to provide a baton capable of flexing in a desired way upon impact and of subsequently returning to its original shape. Such flexing may absorb some of the energy of impact and may make the judgement of how hard to strike less critical. The flexing may be substantially localized at a flexing point.

The baton may be provided with a side handle and some flexibility may be provided in the connection between the side handle and the baton's body. The baton may be heavier at one end than the other.

The second member may be of annular or other cross-section; the cross-section and/or wall thickness of the second member need not be constant throughout its length.

Embodiments of the invention will now be described, by way of example only, with reference to the accompanying drawings in which:
Figure 1 shows a perspective view of a bull bar in accordance with the present invention;
Figure 2 shows a cross-section along line 2-2 of Figure 1;
Figure 3 shows a perspective view of a portion of the core encased in one of the horizontal bars of Figure 1;
Figures 4 and 5 show respectively a perspective view and an enlarged fragmentary sectional view of another bull bar in accordance with the present invention in which additional elements are incorporated in fixing the bull bar for use and the attachment of fittings thereto;
Figures 6,7 an 8 are enlarged fragmentary views showing different inserts which may be incorporated into, for example, a bull bar in accordance with the invention;
Figure 9 is a sectional view through a bull bar with wiring for an electric lamp;
Figure 10 is a fragmentary perspective view of part of yet another bull bar;
Figure 11 shows a perspective view of a baton in accordance with the present invention;
Figure 12 shows a cross-section along line 12-12 of Figure 11;
Figure 13 shows a perspective view of a portion of the core of the baton; and
Figure 14 shows a cross-section through a panel which is not part of present invention.

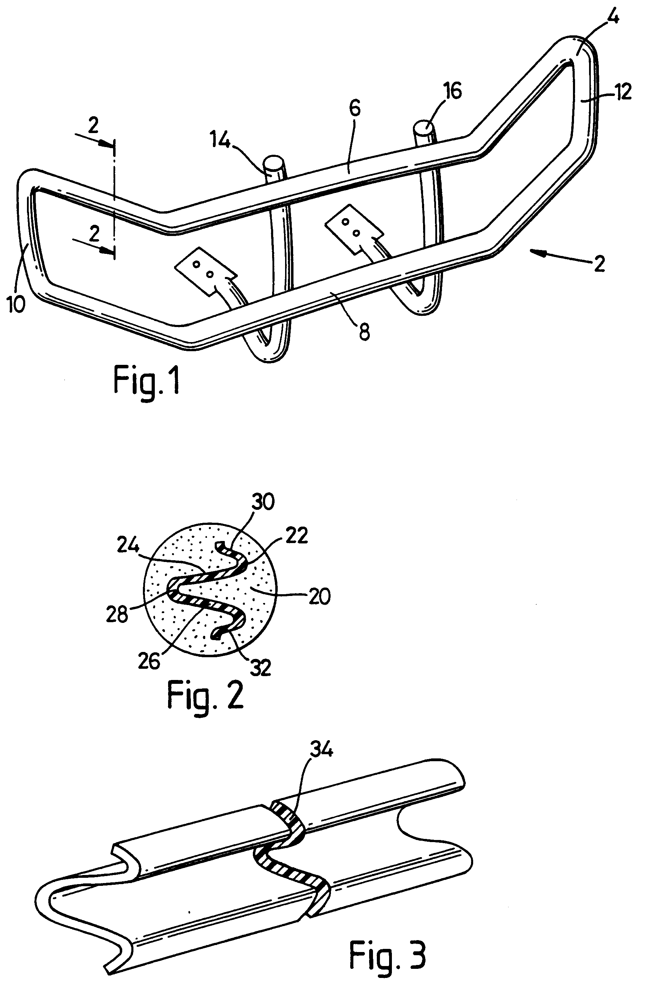

The bull bar 2 shown in Figure 1 comprises a bar 4 formed into a continuous loop having a pair of parallel horizontal sections 6,8, connected at their ends by vertical sections 10,12. The bar 4 is supported by a pair of support brackets 14,16 attached to the rear of each horizontal section 6,8 and adapted to be secured to the chassis of a vehicle to which the bull bar 2 is to be attached.

As shown in Figure 2, the bar 4 comprises a first member 20 of expanded plastics material which entirely encases a second member 22. In this example, the second member 22 is made of ABS and effectively forms a core of the bar, and the first member 20 is made of an expanded integral skin foam having appropriate density and hardness.

The cross-section of the second member 22 in this embodiment is substantially W-shaped but it may be of another suitable shape. It comprises a pair of spaced central legs 24,26 joined at one end by a central web 28. The other end of each central leg 24,26 is connected to a respective outer leg 30,32 which extends a short distance substantially parallel to its respective central leg before flaring out perpendicularly away from that leg towards the outside of the bar.

The second member 22 is formed by a vacuum moulding process and in the course of this a flexing point 34 is formed in the member. In this example, the flexing point 34 is formed by changing the shape of the second member at a desired point.

An A-bar, or other protective bar, for a vehicle may be similarly formed as a composite structure of a first member of expanded plastics material and a vacuum formed second member.

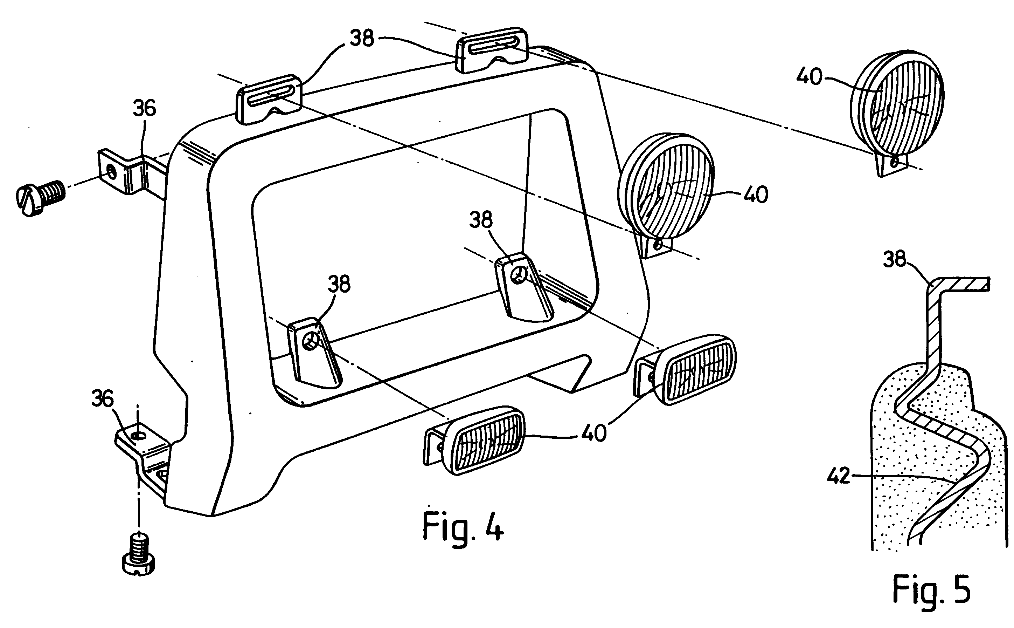

In Figures 4 and 5 another bull bar is shown which is made in essentially the same manner as the bull bar just described but in which fixing brackets 36 are incorporated for mounting the bull bar for use, and also attachment brackets 38 for attachment of accessories to the bull bar, such as driving lamps 40 as shown. The fixing brackets 36 and attachment brackets 38, which may be of metal or suitable plastics material, are moulded into the bull bar as the second member is formed, so that they become integral parts of the bull bar structure. Anchorage portions 42 of the brackets are angled or joggled within the body of the bull bar, as shown in Figure 5, to enhance the security and rigidity of their attachment to the bull bar.

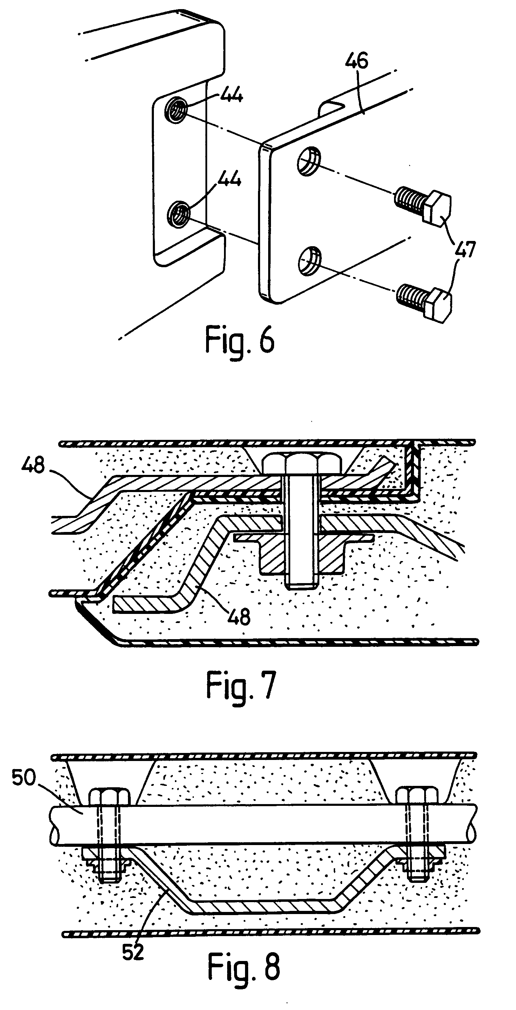

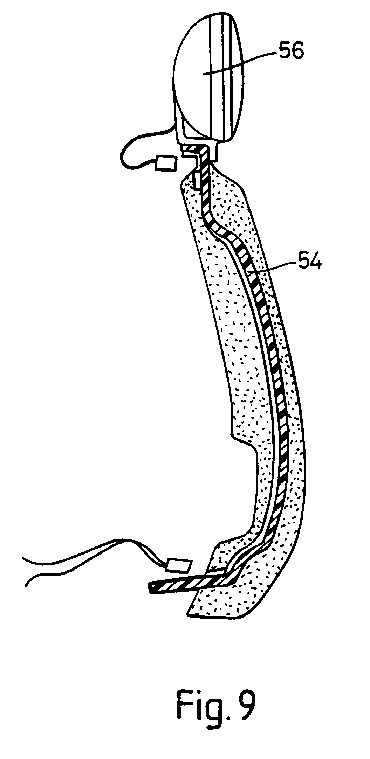

The bull bars described, and other comparably formed composite articles, may have inserts, which may again of metal or plastics material, included in them, as shown by way of example in Figures 6,7 and 8. In Figure 6 internally screw-threaded inserts 44 are moulded in place in the composite article for the attachment of another article or element 46 to the composite article by screws 47. Figure 7 shows inserts 48 moulded into two composite articles to provide anchorages for bolting the articles together, and Figure 8 shows two moulded-in inserts 50,52 which are also bolted together.

If desired, a wiring loom 54, Figure 9, may be moulded into a composite article in accordance with the present invention, such as one of the bull bars described, an A-bar or other protective part for a vehicle, for the supply of electrical power to one or more driving lamps 56 and/or other electrically powered accessories. The wiring loom 54 is moulded into the composite article as the article is formed.

A particular advantage of the present invention is that it enables the composite article to be readily made in various forms. In the case of a bull bar, A-bar and such for a vehicle the article can be made in different styles to suit the body shapes of different types or models of vehicles.

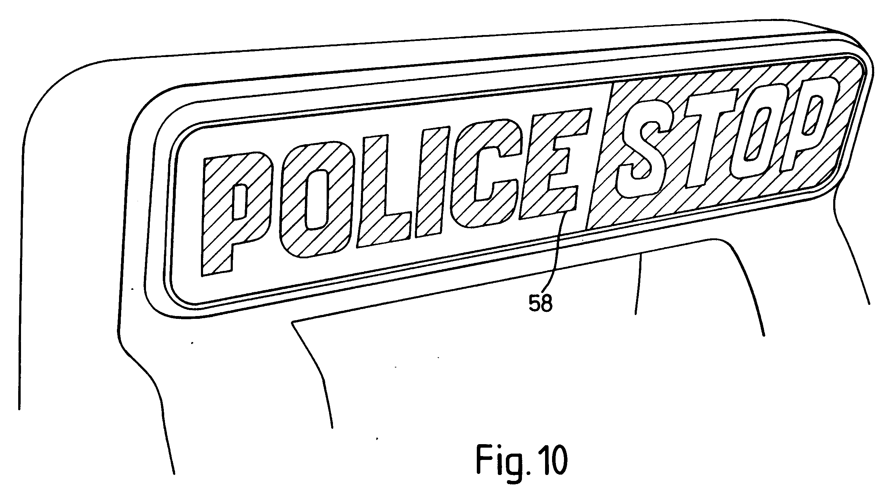

Graphical, informational or promotional matter, such as shown in Figure 10 at 58, may be introduced into the composite article as the first member is moulded onto the second member.

In one particular example of the bull bar the second member is produced from 6mm thick extruded recycled sheet ABS, having a specific gravity of 1.07, which is vacuum formed to the required shape in a vacuum forming machine having either a cast resin or aluminium tool. For some bull bars thinner sheet material may be used, for example 3mm or 4.5mm thick. After it has cooled to a rigid state the vacuum formed member is removed from the machine and trimmed as necessary to the required form. Apertures are also formed in the member. Trimming and the forming of the holes is preferably done automatically by robot but it may be done manually. The member is then placed, with any fixings and/or other inserts required to be included in the bull bar, in a temperature-controlled (about 30-35°) foam box tool of a mould. The tool, which may also be of cast resin or aluminium, is sprayed with a release agent and an in-mould coat which gives the subsequently formed first member good UV stability and enables it to be coloured. Next, a foam mixing machine delivers, in a pre-determined ratio, polyether and isocyanate polyurethane self-skinning foam, of 0.35 specific gravity, into the mould, either open or closed. The foam expands into the closed mould and foam box tool around the second member. The heated foam box tool assists in the curing of the material. After removal from the mould the composite article so formed is left to rest and finish curing for about four hours. Any flash on the cured composite article is removed. The article may be painted subsequently, if desired.

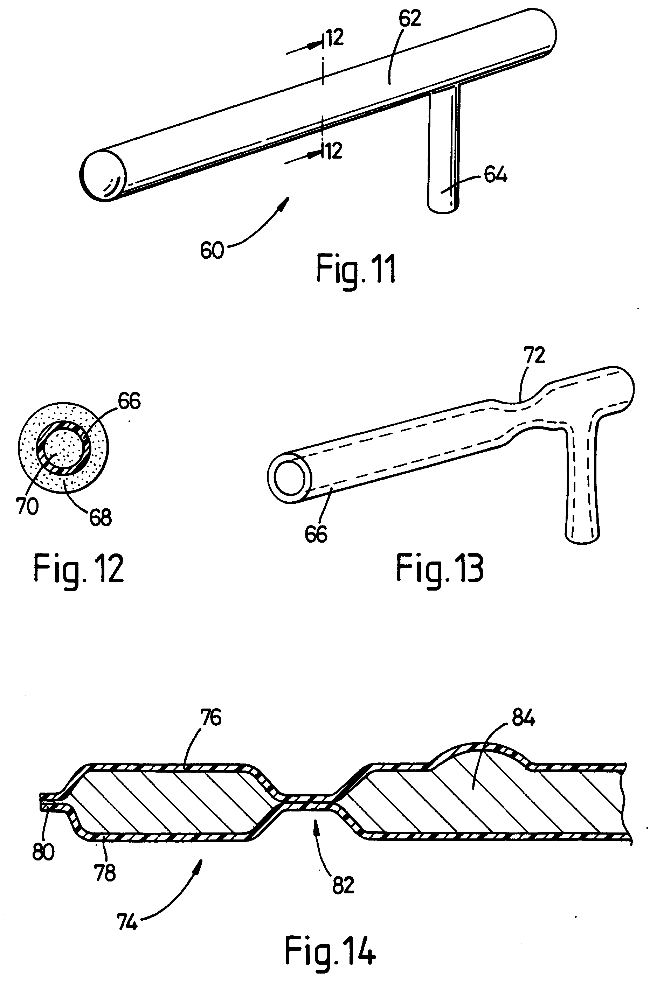

Figure 11 shows a baton 60 having a body 62 with an integral handle 64 towards one end projecting perpendicularly to the body. The baton is made of a bar which is similar in some respect to the bar previously described.

The baton comprises a core 66 (the second member), Figures 12 and 13, of substantially annular cross-section made of ABS surrounded by expanded polyurethane foam 68. The central cavity 70 within the core 66 is also filled with polyurethane foam.

The core 66, which is formed by vacuum moulding, is provided with a flexing point 72, Figure 13, positioned along the body of the core adjacent to the attachment with the handle portion. The flexing point 72 is provided in this case by a portion of the core having a reduced external diameter compared with that at other parts of the core's body. The wall thickness of the core along the flexing point is maintained constant with that at other parts of the core's body.

## Claims

1. An impact absorbing composite article of bar or generally bar-like form, comprising a first member (20, 68) and a second member (22, 66) integrally joined together, the first member (20, 68) being of an expanded plastics material and the second member (22, 66) being of a denser material having generally greater strength characteristics than the material of the first member (20, 68) such that the composite article has overall an impact absorbing strength substantially greater than that of the first member (20, 68), characterised in that the second member (22, 66) is a vacuum formed elastically deformable core element of thermoplastics material covered by the first member (20, 68), and the second member (22, 66) is formed with at least one point of weakness or flexing (34, 72) about which the composite article is designed to bend or deform under impact.

2. An impact absorbing composite article according to claim 1 in which the first member (20, 68) is of a polyurethane foam.

3. An impact absorbing composite article according to claim 1 in which the first member (20, 68) is of an integral skin foam.

4. An impact absorbing composite article according to claim 1 in which the thermoplastics material is ABS.

5. An impact absorbing composite article according to any preceding claim in which the second member (22, 66) is of substantially annular cross-section.

6. An impact absorbing composite article according to claim 5 in which the interior of the second member (66) is filled with polyurethane foam (70).

7. An impact absorbing composite article according to any preceding claim in which at least one additional element (36, 38, 54) is incorporated as an integral part of the structure of the article.

8. An impact absorbing composite article according to claim 7 in which the additional element (36, 38) is adapted for fixing the article for use or for the attachment to the article of another item.

9. An impact absorbing composite article according to any preceding claim in which the point of weakness or flexing (34, 72) is formed by a localized reduction of cross-sectional thickness of the second member.

10. An impact absorbing composite article according to any of claims 1 to 8 in which the point of flexing (72) is formed by a localised change of shape of the second member (22).

11. An impact absorbing composite article according to any preceding claim which is in the form of a protective bar (2) for a vehicle.

12. An impact absorbing composite article according to any of claims 1 to 10 which is in the form of a bull bar (2) adapted for attachment to a vehicle.

13. An impact absorbing composite article according to claim 7 and either one of claims 11 and 12 in which the additional element (54) is a wiring loom.

14. An impact absorbing composite article according to any of claims 1 to 10 which is in the form of a baton (60).

15. An impact absorbing composite article according to claim 14 in which the baton (60) comprises a body and a side handle (64), the second member (66) extending through the body and side handle (64) and being entirely contained by the first member (68).

16. A composite article according to claim 9 and claim 15 in which the point of flexing (72) is formed in the body adjacent to the side handle (64).

## Patentansprüche

1. Ein stoßabsorbierender Verbundgegenstand von einer Stangenform oder von einer im wesentlichen stangenartigen Form, ein erstes Element (20, 68) und ein zweites Element (22, 66) aufweisend, welche miteinander einstückig verbunden sind, wobei das erste Element (20, 68) aus einem geschäumten Kunststoffmaterial und das zweite Element (22, 66) aus einem dichteren Material bestehen, das wesentlich größere Festigkeitseigenschaften als das Material des ersten Elements (20, 68) aufweist, derart, daß der Verbundgegenstand insgesamt eine stoßabsorbierende Festigkeit aufweist, die wesentlich größer ist als diejenige des ersten Elements (20, 68), **dadurch gekennzeichnet**, daß das zweite Element (22, 66) ein vakuumgeformtes, elastisch verformbares Kernelement aus thermoplastischem Material ist, das durch das erste Element (20, 68) bedeckt ist, und das zweite Element (22, 66) mit wenigstens einer Stelle der Schwachheit oder des Biegens (34, 72) ausgebildet ist, wobei der Verbundgegenstand dazu bestimmt ist, sich bei Stoß um diese Stelle zu biegen oder zu deformieren.

2. Ein stoßabsorbierender Verbundgegenstand nach Anspruch 1, bei welchem das erste Element (20, 68) aus einem Polyurethanschaum ist.

3. Ein stoßabsorbierender Verbundgegenstand nach Anspruch 1, bei welchem das erste Element (20, 68) aus einem integralen Hautschaum ist.

4. Ein stoßabsorbierender Verbundgegenstand nach Anspruch 1, bei welchem das thermoplastische Material ABS ist.

5. Ein stoßabsorbierender Verbundgegenstand nach einem der vorhergehenden Ansprüche, bei welchem das zweite Element (22, 66) von einem im wesentlichen ringförmigen Querschnitt ist.

6. Ein stoßabsorbierender Verbundgegenstand nach Anspruch 5, bei welchem das Innere des zweiten Elements (66) mit Polyurethanschaum (70) gefüllt ist.

7. Ein stoßabsorbierender Verbundgegenstand nach einem der vorhergehenden Ansprüche, bei welchem zumindest ein zusätzliches Element (36, 38, 54) als ein integraler Teil der Struktur des Gegenstands eingearbeitet ist.

8. Ein stoßabsorbierender Verbundgegenstand gemäß Anspruch 7, bei welchem das zusätzliche Element (36, 38) dazu befähigt ist, den Gegenstand für die Anwendung zu befestigen oder zur Anbringung eines anderen Gegenstands an dem Verbundgegenstand befähigt ist.

9. Ein stoßabsorbierender Verbundgegenstand nach einem der vorhergehenden Ansprüche, bei welchem die Stelle der Schwachheit oder des Biegens (34, 72) durch eine lokalisierte Reduktion der Querschnittsdicke des zweiten Elements gebildet ist.

10. Ein stoßabsorbierender Verbundgegenstand nach einem der Ansprüche 1 bis 8, bei welchem die Stelle des Biegens (72) durch eine lokalisierte Änderung der Gestalt des zweiten Elements (22) gebildet wird.

11. Ein stoßabsorbierender Verbundgegenstand nach einem der vorhergehenden Ansprüche, welcher in der Gestalt einer schützenden Stange (2) für ein Fahrzeug ist.

12. Ein stoßabsorbierender Verbundgegenstand nach einem der Ansprüche 1 bis 10, welcher in der Gestalt eines Kuhabweisers ("bull bar") (2) ist, der für die Anbringung an einem Fahrzeug befähigt ist.

13. Ein stoßabsorbierender Verbundgegenstand nach Anspruch 7 und nach einem der Ansprüche 11 und 12, bei welchem das zusätzliche Element (54) ein Verdrahtungs-Hauptkabel ist.

14. Ein stoßabsorbierender Verbundgegenstand nach einem der Ansprüche 1 bis 10, welcher in der Gestalt eines Stockes (60) ist.

15. Ein stoßabsorbierender Verbundgegenstand nach Anspruch 14, bei welchem der Stock (60) einen Körper und einen seitlichen Handgriff (64) aufweist, wobei sich das zweite Element (66) durch den Körper und den seitlichen Handgriff (64) erstreckt und durch das erste Element (68) vollständig eingeschlossen ist.

16. Ein Verbundgegenstand nach Anspruch 9 und Anspruch 15, bei welchem die Stelle des Biegens (72) in dem Körper zu dem seitlichen Handgriff (64) benachbart gebildet ist.

## Revendications

1. Article composite absorbant les chocs formé par une barre ou en forme générale de barre, comprenant un premier élément (20, 68) et un deuxième élément (22, 66) joints ensemble d'un seul tenant, le premier élément (20, 68) étant en un matériau plastique expansé et le deuxième élément (22, 66) étant en un matériau plus dense ayant des caractéristiques de résistance généralement plus grandes que le matériau du premier élément (20, 68) de telle sorte que l'article composite a, dans son ensemble, une résistance d'absorption des chocs notablement plus grande que celle du premier élément (20, 68), caractérisé en ce que le deuxième élément (22, 66) est un élément d'armature élastiquement déformable formé sous vide en un matériau thermoplastique recouvert par le premier élément (20, 68) et en ce que le deuxième élément (22, 66) est formé avec un point de faiblesse ou de flexion (34, 72) autour duquel l'article composite est conçu pour se courber ou se déformer lors d'un choc.

2. Article composite absorbant les chocs selon la revendication 1, dans lequel le premier élément (20, 68) est en mousse de polyuréthanne.

3. Article composite absorbant les chocs selon la revendication 1, dans lequel le premier élément (20, 68) est en une mousse à peau d'un seul tenant.

4. Article composite absorbant les chocs selon la revendication 1, dans lequel le matériau thermoplastique est l'ABS.

5. Article composite absorbant les chocs selon l'une des revendications précédentes, dans lequel le deuxième élément (22, 66) a une section transversale pratiquement annulaire.

6. Article composite absorbant les chocs selon la revendication 5, dans lequel l'intérieur du deuxième élément (66) est rempli d'une mousse de polyuréthanne (70).

7. Article composite absorbant les chocs selon l'une des revendications précédentes, dans lequel au moins un élément additionnel (36, 38, 54) est incorporé en tant que partie intégrante de la structure de l'article.

8. Article composite absorbant les chocs selon la revendication 7, dans lequel l'élément additionnel (36, 38) est adapté pour fixer l'article pour son utilisation ou pour la fixation d'un autre élément à l'article.

9. Article composite absorbant les chocs selon l'une des revendications précédentes, dans lequel le point de faiblesse ou de flexion (34, 72) est formé par une réduction localisée de l'épaisseur de la section transversale du deuxième élément.

10. Article composite absorbant les chocs selon l'une des revendications 1 à 8, dans lequel le point de flexion (72) est formé par un changement localisé de la forme du deuxième élément (22).

11. Article composite absorbant les chocs selon l'une des revendications précédentes, qui est sous la forme d'une barre de protection (2) pour le véhicule.

12. Article composite absorbant les chocs selon l'une des revendications 1 à 10, qui est sous la forme d'un pare-buffle (2) adapté pour être fixé sur un véhicule.

13. Article composite absorbant les chocs selon la revendication 7 et l'une ou l'autre des revendications 11 et 12, dans lequel l'élément additionnel (54) est une gaine isolante d'un câble conducteur.

14. Article composite absorbant les chocs selon l'une des revendications 1 à 10, qui est sous la forme d'une matraque (60).

15. Article composite absorbant les chocs selon la revendication 14, dans lequel la matraque (60) comprend un corps et une poignée latérale (64), le deuxième élément (66) s'étendant à travers le corps et la poignée latérale (64) et étant entièrement contenu dans le premier élément (68).

16. Article composite selon la revendication 9 et la revendication 15, dans lequel le point de flexion (72) est formé dans le corps, adjacent à la poignée latérale (64).
